# EUROPÄISCHE PATENTSCHRIFT

(11) **EP 1 070 890 B1**
(45) Veröffentlichungstag und Bekanntmachung des Hinweises auf die Patenterteilung: **28.08.2002**
(21) Anmeldenummer: 00110642.6
(22) Anmeldetag: 18.05.2000
(51) Int. Cl.: F16K 1/14, F16K 11/048, F16K 27/02

(54) **Sitzventil**
Seat valve
Soupape à siège

(30) Priorität: 22.07.1999 DE 29912784 U
(43) Veröffentlichungstag der Anmeldung: 24.01.2001
(73) Patentinhaber: HEILMEIER & WEINLEIN Fabrik für Oel-Hydraulik GmbH & Co. KG, 81673 München (DE)
(72) Erfinder: Brunner, Rudolf, Obering., 85598 Baldham (DE); Heusser, Martin, Dipl.-Ing., 81245 München (DE)
(74) Vertreter: Grünecker, Kinkeldey, Stockmair & Schwanhäusser Anwaltssozietät

(56) Entgegenhaltungen:
- DE-A- 3 722 343
- DE-B- 1 282 388
- DE-U- 29 513 944
- DE-U- 29 810 860
- US-A- 4 676 271
- US-A- 5 407 173

## Beschreibung

Die Erfindung betrifft ein Sitzventil der im Oberbegriff des Anspruchs 1 angegebenen Art.

In dem aus DE-U-298 10 860, Fig. 4 bekannten Sitzventil, das als 3/2-Wege-Sitzventil mit Magnetbetätigung ausgebildet ist, ist das an der Betätigerseite mit dem Ventilsitz zusammenwirkende Schließelement eine Vollkugel aus Stahl. Neben dem Vorteil einer absoluten Leckagefreiheit in der Schließstellung zwischen der kugeligen Dichtfläche des Schließelementes und dem kreisrunden Ventilsitz sind Vollkugeln in beliebigen Größen handelsüblich und kostengünstig. Der Durchmesser des Ventilsitzes wird diktiert durch die für das Sitzventil geltenden Anforderungen, z.B. die maximale Durchgangsrate und den dabei gegebenen Durchströmwiderstand. Nach dem Durchmesser des Ventilsitzes hat sich der Radius der kugeligen Dichtfläche des Schließelementes zu richten, um eine optimale Zusammenarbeit zwischen dem Schließelement und dem Ventilsitz zu gewährleisten. Andererseits ist man bestrebt, den inneren Führungs- und Dichtungsdurchmesser der Zylinderbuchse so klein wie möglich zu halten, in etwa entsprechend dem Durchmesser des Ventilsitzes, um die aus dem am Betätiger wirkenden Druck hinter dem Schließelement entstehenden Kräfte und die Betätigungskraft für die Verstellung des Schließelementes an den Ventilsitz moderat zu halten. Dieser Anforderung steht bei Verwendung einer preiswerten Vollkugel als Schließelement deren Kugeldurchmesser entgegen, der erheblich größer ist als der Durchmesser des Ventilsitzes. Deshalb weist die Zylinderbuchse in ihrer Innenbohrung zwischen dem Betätiger und dem Ventilsitz eine Aufweitung für die Vollkugel auf. Diese Aufweitung bedingt, dass das Schließelement zusammen mit der Zylinderbuchse eingebaut werden muss und dann in der Aufweitung gefangen ist. Im Hinblick auf eine einfache und kostengünstige Herstellung der Gehäusebohrung und der Zylinderbuchse, und auch aus Montagegründen, wird die Zylinderbuchse in die Gehäusebohrung eingepresst und durch Verstemmen von der Gehäuseaußenseite her lagegesichert. Diese Lagesicherung ist nicht mehr lösbar. Bei der Formung und Montage des Ventilsitzes in der Gehäusebohrung und bei der Montage der Zylinderbuchse kann die Kreisform des Ventilsitzes beschädigt oder deformiert werden, was einer leckagefreien Zusammenarbeit zwischen der kugeligen Dichtfläche des Schließelementes und dem Ventilsitz abträglich ist. Auch andere Einflüsse können die Rundheit des Ventilsitzes oder die Präzision einer kegeligen Fase des Ventilsitzes beeinträchtigen; z.B. Korrosion. Schließlich kann nach längerem Betrieb des Sitzventils durch Schläge oder normalem Verschleiß die Leckagefreiheit verloren gehen. In all diesen Fällen ist wegen der in der Zylinderbuchse gefangenen Vollkugel keine Nachbearbeitung des Ventilsitzes mehr möglich, ohne die durch Kaltverformung hergestellte Lagesicherung der Zylinderbuchse zu zerstören.

Weiterhin wird hingewiesen auf: DE-U 295 13 944; DE 37 22 343 A; US-4 676 271 A; US 5 407 173 A und DE 12 82 388 B.

Der Erfindung liegt die Aufgabe zugrunde, ein Sitzventil der eingangs genannten Art zu schaffen, bei dem unter Beibehalt der einfachen Herstellung und Montage und der Lagesicherung der Zylinderbuchse durch Kaltverformung dennoch eine Nachbearbeitung des zur Betätigungsseite weisenden Ventilsitzes möglich ist.

Die gestellte Aufgabe wird mit den Merkmalen des Anspruchs 1 gelöst.

Obwohl das Schließelement mit seiner kugeligen Dichtfläche optimal mit dem kreisrunden Ventilsitz zusammenarbeitet (Leckagefreiheit in der Schließstellung), lässt sich bei wie üblich möglichst klein bemessenem inneren Führungs- und Dichtdurchmesser der Zylinderbuchse das Schließelement dank der Taille nachträglich in die Zylinderbuchse einbringen oder jederzeit aus der Zylinderbuchse entnehmen. Dadurch besteht die jederzeitige Möglichkeit einer Nacharbeitung des Ventilsitzes ohne Zerstörung der Lagesicherung der Zylinderbuchse. Dazu kommt der wünschenswerte Vorteil einer sauberen Führung des Schließelementes mit seiner Taille in der Innenbohrung der Zylinderbuchse, wodurch das häufig zu beobachtende Tanzen einer Vollkugel vermieden wird, das nicht nur starke Geräusche erzeugt, sondern auch einen starken Verschleiß. Die den Ein- und Ausbau des auf einer preiswerten Vollkugel basierenden Schließelements gestattende Taille ist mit kostengünstigem Aufwand und sehr präzise formbar.

Der Durchmesser der Taille des Schließelementes sollte geringfügig kleiner sein als der inneren Dicht- und Führungsdurchmesser der Zylinderbuchse, um ein unbehindertes Arbeitsspiel des Schließelementes und dessen leichte Entnahme oder Einführung zu garantieren.

Herstellungstechnisch ist es günstig, wenn der innere Dicht- und Führungsdurchmesser der Zylinderbuchse über deren Länge gleich bleibt oder nach außen in wenigstens einer Stufe zunimmt. Diese Stufe könnte sich am der Gehäuseaußenseite zugewandten Ende der Zylinderbuchse befinden, um dort einen Verschlussring festlegen zu können. Denkbar wäre es auch, den Innendurchmesser der Zylinderbuchse dort am kleinsten zu wählen, wo das Schließelement untergebracht ist.

Zweckmäßigerweise ist die Taille des Schließelements zylindrisch geschliffen, um eine saubere Führung des Schließelementes zu erzielen. Zum Schleifen der Vollkugel wird zweckmäßigerweise ein Centerless-Schleifverfahren angewendet. Beim Centerless-Schleifen liegt eine drehangetriebene, zylindrische Schleifscheibe einer ebenfalls drehangetriebenen, zylindrischen Antriebsscheibe mit einem Zwischenabstand gegenüber der verändert wird, indem die beiden Scheiben zueinander verstellt werden. In den Zwischenraum zwischen den Scheiben ist eine Vollkugel oder sind mehrere übereinanderliegend gehaltene Vollkugeln eingesetzt und an einem in den Zwischenraum eingreifenden Lineal abgestützt. Weitere Hilfseinrichtungen sind nicht erforderlich. Ein Schleifdurchgang dauert bei einer 8 mm-Vollkugel aus durchgehärtetem Stahl nur wenige Zehntel Sekunden.

Alternativ könnte die Taille auch durch einen umlaufenden Einstich in spanabhebender oder schleifender Bearbeitung geformt werden.

Der Durchmesser der Taille des Schließelementes sollte zwischen etwa 75 % und 90 % des Vollkugeldurchmessers liegen.

Herstellungs- und montagetechnisch günstig ist es, den Ventilsitz an einem in die Bohrung des Gehäuses eingepressten Einsatz zu formen. Beim Einpressen und aus den eingangs geschilderten Gründen kann zwar der Ventilsitz im Einsatz z.B. seine Kreisform verlieren, jedoch vor Einsetzen des Schließelementes oder nach Entnahme des Schließelementes nachgearbeitet werden. Dabei spielt es eine untergeordnete Rolle, wenn die Zylinderbuchse mit axialem Druck an dem Einsatz anliegt, weil durch eine Nachbearbeitung allfällige Deformationen des Ventilsitzes beseitigbar sind, und zwar - was wichtig ist - bereits in der endgültigen Arbeitsposition der Zylinderbuchse und des Einsatzes.

Um die Zylinderbuchse durch Kaltverformen lagezusichem, wird am einfachsten die Gehäuseaußenseite um das Ende der Zylinderbuchse verstemmt. Dies führt zu einer wirksamen Abdichtung nach außen.

Der Vollkugeldurchmesser sollte ca. 125 %, der Taillendurchmesser ca. 113 % des Durchmesser des Ventilsitzes betragen.

Der Stößel des Betätigers, an dem die Betätigungskräfte angreifen, und der nach außen hin abzudichten ist, sollte einen Durchmesser haben, der etwa 60 % des Durchmesser des Ventilsitzes beträgt.

Um bei einem Sitzventiltyp nur einen Schließelementtyp einbauen zu können, selbst wenn das Sitzventil mehrere zusammenwirkende Einzelventile enthält, sollte auch das Schließelement an der der Betätigerseite gegenüberliegenden, federbeaufschlagten Seite dieselbe Form und Größe wie das Schließelement an der Betätigerseite haben.

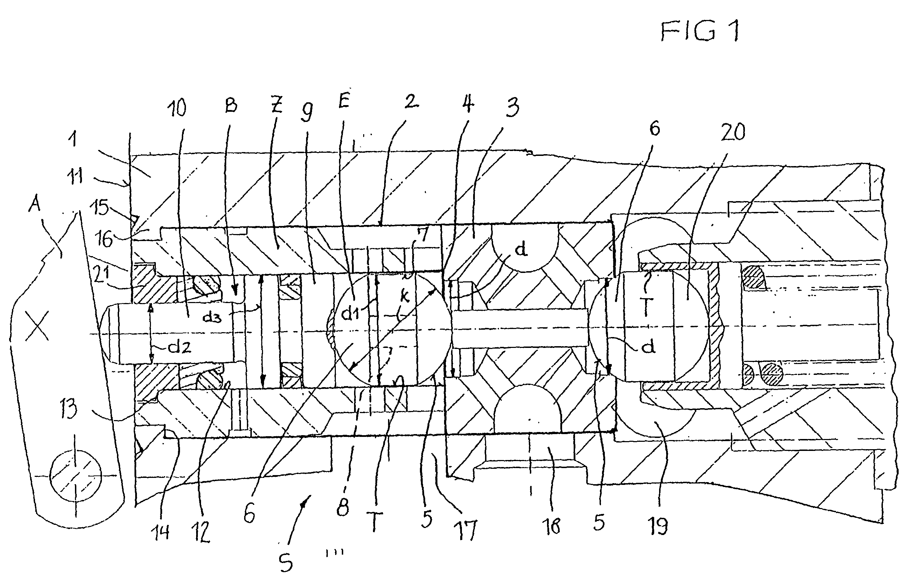

Anhand Fig. 1 wird eine Ausführungsform eines in einem Längsschnitt gezeigten Sitzventils erläutert.

In einem Gehäuse 1 (z.B. aus Vollstahl) ist eine Bohrung 2 geformt, die von einer Betätigungs-Außenseite 11 des Gehäuses 1 ausgeht. In die Bohrung 2 ist ein ringförmiger Einsatz 3 (aus Vollstahl) eingepresst, der der Betätigungs-Außenseite 11 zugewandt einen kreisrunden Ventilsitz 4 enthält. Von der Betätigungs-Gehäuseseite 11 aus ist in die Bohrung 2 hinter dem Einsatz 3 eine Zylinderbuchse Z eingepresst, die mit ihrem innenliegenden Ende am Einsatz 3 anstehen kann, und an ihrem außenliegenden Ende durch Kaltverformen lagegesichert ist, und zwar durch Verstemmen bei 15, wodurch Material 16 des Gehäuses 1 hinter eine außenliegende Schulter 14 der Zylinderbuchse Z getrieben wird.

In der Zylinderbuchse Z ist ein Schließelement E mit wenigstens einer kugeligen Dichtfläche 5 untergebracht. Die Dichtfläche 5 ist an den Ventilsitz 4 anlegbar, um eine Strömungsverbindung zwischen Anschlüssen 17 und 18 zur Bohrung 2 zu unterbrechen. Das Schließelement E ist als Vollkugel 6 hergestellt mit einer konzentrischen Taille T geformt, deren Durchmesser d1 kleiner ist als der Vollkugeldurchmesser k. Die Taille T ist beispielsweise zylindrisch und durch Schleifen, insbesondere Centerless-Schleifen, geformt. Alternativ (gestrichelt angedeutet) könnte die Taille T auch durch einen umlaufenden Einstich 8 in die Vollkugel 6 geformt sein. In der gezeigten Ausführungsform bildet die Taille T eine exakt zylindrische Führungsfläche 7.

In der mit 12 bezeichneten Innenbohrung der Zylinderbuchse Z ist hinter dem Schließelement E ein Betätiger B abgedichtet verschieblich geführt, der in der gezeigten Ausführungsform aus einem Kolben 9 und einem damit verbundenen Stößel 10 besteht. Der Stößel 10 ragt mit seinem freiliegenden Ende über die Betätigungs-Gehäuseseite 11 vor. An dem Stößel 10 greift bei der gezeigten Ausführungsform ein Aktuator A an, der beispielsweise ein durch einen Magneten betätigter Hebel sein kann. Es ist aber auch denkbar, am Stößel 10 einen Handhebel, Druckknopf, eine Schaltkulisse, direkt einen Schaltmagneten oder einen anderen Betätigungsantrieb angreifen zu lassen, mittels dessen das Schließelement E aus der gezeigten, abgehobenen Stellung auf den Ventilsitz 4 aufsetzbar ist.

Die Innenbohrung 12 der Zylinderbuchse Z hat einen Durchmesser d3, der vom Einsatz 3 bis zu einer Schulter 13 gleich bleibt. Die Schulter 13 dient zum Festlegen eines Dichtungsstütz- und Verschlussringes 21.

An der dem Ventilsitz 4 gegenüberliegenden Seite ist ein weiterer Ventilsitz geformt, der mit einem weiteren Schließelement 20 zusammenarbeitet, das die gleiche Form und Größe wie das Schließelement E, d.h. eine kugelige Dichtfläche 5, und eine zylindrische Taille T, besitzt und auf einer Vollkugel 6 basiert. Das Schließelement 20 wird von einer Feder beaufschlagt, die über eine bewegungsübertragende Kopplung auch das Schließelement E in die in Fig. 1 gezeigte Position der Zylinderbuchse Z verstellt, sofern der Aktuator A nicht betätigt ist.

Bei der Montage des Sitzventils S wird zunächst der Einsatz 3 in die Bohrung 2 eingepresst. Dann wird die Zylinderbuchse Z bis zur Anlage am Ansatz 3 eingepresst und bei 15 verstemmt. Ehe das Schließelement E und der Betätiger B mit seinen Dichtungen eingebaut werden, kann der Ventilsitz nachgearbeitet werden, um gegebenenfalls durch das Einpressen des Einsatzes 3 und/oder der Zylinderbuchse Z aufgetretene Deformationen des Ventilsitzes 4 zu beseitigen. Dann wird das Schließelement E eingebaut und nachfolgend der Betätiger B mit seinen Dichtungen und dem Ring 21.

Sollte sich im Betrieb in der Schließstellung des Schließelementes E eine Undichtigkeit ergeben, dann werden die vorerwähnten Innenkomponenten ausgebaut und wird der Ventilsitz 4 nachbearbeitet. In beiden Fällen braucht die Lagesicherung der Zylinderbuchse Z durch die Kaltverformung, z.B. Verstemmung, nicht zerstört zu werden. Bei den Schließelementen handelt es sich zweckmäßigerweise um durchgehärtete und geschliffene Vollkugeln aus Stahl. Bei einfacheren Anforderungen kann es genügen, den Ventilsitz 4 im Einsatz 3 aus ungehärtetem Stahl zu formen und/oder Schließelemente aus ungehärtetem Stahl zu verwenden.

Die Durchmesserrelationen in einem solchen Sitzventil werden unter anderem durch den erforderlichen Durchmesser d des Ventilsitzes 4 dominiert. Bei einer bevorzugten Ausführungsform betragen der Vollkugeldurchmesser k ca. 125 %, der Taillendurchmesser d1 ca. 113 %, der Innenbohrungsdurchmesser d3 ca. 115 % und der Stößeldurchmesser d2 ca. 60 % des Durchmessers d des Ventilsitzes 4.

## Patentansprüche

1. Sitzventil (S) mit einem Gehäuse (1), in dem in einer Bohrung (2) ein Ventilsitz (4) und eine Zylinderbuchse (Z) für einen Betätiger (B) und ein Schließelement (E) mit kugeliger Dichtfläche (5) angeordnet sind, wobei das Schließelement (E) mit seiner Dichtfläche (5) relativ zum Ventilsitz (4) mittels des an einer außenliegenden Gehäuseseite (11) zugänglichen Betätigers (B) verstellbar ist, **dadurch gekennzeichnet, dass** das Schließelement (E) eine Vollkugel (6) mit einer konzentrischen Taille (T) ist, deren Durchmesser (d1) größer ist als der Durchmesser (d) des Ventilsitzes (4), und kleiner ist als der innere Dicht- und Führungsdurchmesser (d3) der Zylinderbuchse (Z), dass der innere Dicht- und Führungsdurchmesser (d3) der Zylinderbuchse (Z) kleiner ist als der Vollkugeldurchmesser (k), und dass das Schließelement (E) von der Gehäuseaußenseite (11) in die Zylinderbuchse (Z) einbringbar oder aus ihr entnehmbar ist.

2. Sitzventil nach Anspruch 1, **dadurch gekennzeichnet, dass** der Taillendurchmesser (d1) um 0,1 bis 0,2 mm kleiner ist als der innere Dicht- und Führungsdurchmesser (d3).

3. Sitzventil nach Anspruch 1, **dadurch gekennzeichnet, dass** der innere Dicht- und Führungsdurchmesser (d3) in der Zylinderbuchse (Z) von deren dem Ventilsitz (4) benachbartem Ende zur Gehäuseaußenseite (11) gleichbleibend ausgebildet ist oder in wenigstens einer Stufe (13) nach außen zunimmt.

4. Sitzventil nach Anspruch 1, **dadurch gekennzeichnet, dass** die Taille (T) des Schließelements (E) zylindrisch geschliffen ist, vorzugsweise durch Centerless-Schleifen der Vollkugel (6).

5. Sitzventil nach Anspruch 1, **dadurch gekennzeichnet, dass** die Taille (T) des Schließelements (E) durch einen umlaufenden Einstich (8) in der Vollkugel (6) gebildet ist.

6. Sitzventil nach Anspruch 1, **dadurch gekennzeichnet, dass** der Taillendurchmesser (d1) zwischen etwa 75 % und 90 % des Vollkugeldurchmessers (k) beträgt.

7. Sitzventil nach Anspruch 1, **dadurch gekennzeichnet, dass** der Ventilsitz (4) an einem in die Bohrung (2) eingesetzten Einsatz (3) aus gehärtetem oder ungehärtetem Stahl angeordnet ist, und dass die Zylinderbuchse (Z) axial an dem Einsatz anliegt.

8. Sitzventil nach Anspruch 1, **dadurch gekennzeichnet, dass** das außenliegende Ende der Zylinderbuches (Z) eine Schulter (14) aufweist und durch Verstemmen (15) des Gehäusematerials lagegesichert ist.

9. Sitzventil nach Anspruch 1, **dadurch gekennzeichnet, dass** der Taillen-Durchmesser (d1) ca. 113 % und der Vollkugeldurchmesser (k) ca. 125 % des Ventilsitzesdurchmessers (d) betragen.

10. Sitzventil nach Anspruch 1, **dadurch gekennzeichnet, dass** an der dem Schließelement (E) gegenüberliegenden Seite des Einsatzes (3) ein weiteres, mit dem Schließelement (E) gekoppeltes, federbelastetes Schließelement mit derselben Form und Größe wie das Schließelement (E) vorgesehen ist.

11. Sitzventil nach wenigstens einem der vorhergehenden Ansprüche, **dadurch gekennzeichnet, dass** an der dem Schließelement (E) gegenüberliegenden Seite des Einsatzes (3) ein weiteres, mit dem Schließelement (E) in der jeweiligen Druckrichtung gekoppeltes, federbelastetes Schließelement mit derselben Form und Größe wie das Schließelement (E) vorgesehen ist.

## Claims

1. Seated valve (S) having a housing (1), a housing bore (2) in which a valve seat (4), a cylindrical bushing (Z) for an actuator (B) and a closure element (E) having a special sealing surface (5) are positioned, said closure element (E) being axially movable relative to said valve seat (4) by means of said actuator (B) which is freely accessible at an outer housing side (11) **characterised in that** said closure element (E) is a full sphere (6) with a concentric waist portion (T) the diameter (d1) of which is smaller than the inner sealing and guiding diameter (d3) of said cylindrical bushing (Z) but larger than the diameter (d) of said valve seat (4), that said inner sealing and guiding diameter (d3) of said cylindrical bushing (Z) is smaller than the full sphere diameter (k) and that said closure element (E) can be inserted into said cylindrical bushing (Z) or can be removed from said cylindrical bushing (Z) from said outer housing side (11).

2. Seated valve as in claim 1, **characterised in that** said waist portion diameter (d1) is smaller by 0.1 to 0.2 mm than the inner sealing and guiding diameter (d3) of said cylindrical bushing (Z).

3. Seated valve as in claim 1, **characterised in that** said inner sealing and guiding diameter (d3) of cylindrical bushing (Z) is kept uniformly from its end adjacent to said valve seat (4) towards said housing outer side (11), or is formed to increase by at least one step (13).

4. Seated valve as in claim 1, **characterised in that** said waist portion (T) of said closure element (E) is ground cylindrically, preferably by centreless grinding of said full sphere (6).

5. Seated valve as in claim 1, **characterised in that** said waist portion (T) of said closure element (E) is formed by a circumferential groove (8) in said full sphere (6).

6. Seated valve as in claim 1, **characterised in that** said diameter (d1) of said waist portion (T) amounts to about 75% to 90% of the full sphere diameter (k).

7. Seated valve as in claim 1, **characterised in that** said valve seat (4) is provided at an insert (3) made of hardened or non-hardened steel which insert (3) is inserted into said housing bore (2), and that cylindrical bushing (Z) when secured in place axially abuts said insert.

8. Seated valve as in claim 1, **characterised in that** the outer end of said cylindrical bushing (Z) has a shoulder (14) and is secured in place by mortising of the housing material.

9. Seated valve as in claim 1, **characterised in that** said waist portion diameter (d1) amounts to about 113% and said full sphere diameter (k) to about 125% of diameter (d) of said valve seat (4).

10. Seated vale as in claim 1, **characterised in that** a further, spring loaded closure element with the same form and size as closure element (E) is provided at the side of said insert (3) opposite to said closure element (E), said further closure element being coupled to said closure element (E) in the respective pressure transmitting direction.

11. Seated valve as in at least one of the preceding claims, **characterised in that** a further closure element (20) having the same form and size as closure element (E) is provided at the side of insert (3) opposite to the side of closure element (E), said further closure element being spring loaded and coupled in pressure transmitting direction with closure element (E).

## Revendications

1. Soupape à siège (S) comprenant un corps (1), dans lequel un siège de soupape (4) et une douille cylindrique (Z) pour un actionneur (B) et un élément de fermeture (E) avec une portée de joint sphérique (5) sont disposés dans un alésage (2), l'élément de fermeture (E) pouvant être déplacé par sa portée de joint (5) par rapport au siège de soupape (4) au moyen de l'actionneur (B) accessible sur le côté de corps (11) extérieur, **caractérisée en ce que** l'élément de fermeture (E) est une bille massive (6) avec une taille concentrique (T), dont le diamètre (d1) est supérieur au diamètre (d) du siège de soupape (4), et inférieur au diamètre intérieur de guidage et d'étanchéité (d3) de la douille cylindrique (Z), **en ce que** le diamètre intérieur de guidage et d'étanchéité (d3) de la douille cylindrique (Z) est inférieur au diamètre (k) de la bille massive, et **en ce que** l'élément de fermeture (E) peut être introduit dans la douille cylindrique (Z) ou être retiré de cette dernière à partir du côté extérieur (11) du corps.

2. Soupape à siège suivant la revendication 1, **caractérisée en ce que** le diamètre (d1) de la taille est inférieur de 0,1 à 0,2 mm au diamètre intérieur de guidage et d'étanchéité (d3).

3. Soupape à siège suivant la revendication 1, **caractérisée en ce que** le diamètre intérieur de guidage et d'étanchéité (d3) dans la douille cylindrique (Z) a une réalisation constante de l'extrémité de la douille adjacente au siège de soupape (4) jusqu'au côté extérieur (11) du corps ou augmente vers l'extérieur dans au moins un étage (13).

4. Soupape à siège suivant la revendication 1, **caractérisée en ce que** la taille (T) de l'élément de fermeture (E) est formée par rectification cylindrique, de préférence par rectification sans centre de la bille massive (6).

5. Soupape à siège suivant la revendication 1, **caractérisée en ce que** la taille (T) de l'élément de fermeture (E) est formée par une gorge périphérique (8) dans la bille massive (6).

6. Soupape à siège suivant la revendication 1, **caractérisée en ce que** le diamètre (d1) de la taille atteint entre environ 75% et 90% du diamètre (k) de la bille massive.

7. Soupape à siège suivant la revendication 1, **caractérisée en ce que** le siège de soupape (4) est disposé sur un insert (3) en acier trempé ou non trempé, logé dans l'alésage (2), et **en ce que** la douille cylindrique (Z) s'applique dans le sens axial sur l'insert.

8. Soupape à siège suivant la revendication 1, **caractérisée en ce que** l'extrémité extérieure de la douille cylindrique (Z) présente un épaulement (14) et est bloquée en position par matage (15) du matériau du corps.

9. Soupape à siège suivant la revendication 1, **caractérisée en ce que** le diamètre (d1) de la taille représente environ 113% et le diamètre (k) de la bille massive environ 125% du diamètre (d) du siège de soupape.

10. Soupape à siège suivant la revendication 1, **caractérisée en ce qu'**un autre élément de fermeture chargé par ressort, couplé à l'élément de fermeture (E), de même forme et de même dimension que l'élément de fermeture (E), est prévu sur le côté de l'insert (3) opposé à l'élément de fermeture (E).

11. Soupape à siège suivant l'une au moins des revendications précédentes, **caractérisée en ce qu'**un autre élément de fermeture chargé par ressort, couplé à l'élément de fermeture (E) dans le sens de pression respectif, de même forme et de même dimension que l'élément de fermeture (E), est prévu sur le côté de l'insert (3) opposé à l'élément de fermeture (E).
